# EUROPEAN PATENT APPLICATION

(11) **EP 1 099 510 A2**
(43) Date of publication of application: **16.05.2001**
(21) Application number: 00113733.0
(22) Date of filing: 29.06.2000
(51) Int. Cl.: B23Q 1/66, B23Q 1/03, B23Q 3/08, B23Q 3/10, B25B 11/00, B23Q 1/00

(54) **Automatic machine for machining panels and the like**

(30) Priority: 12.11.1999 IT MI992368
(71) Applicant: Alberti Vittorio S.p.A., 20063 Cernusco sul Naviglio, Milano (IT)
(72) Inventor: Alberti, Luigi, 20063 Cernusco sul Naviglio (Milano) (IT)
(74) Representative: Cicogna, Franco

(57) **Abstract**

The invention relates to an automatic machine for processing panels and the like, comprising, on a bearing framework, a panel supporting table.

The main feature of the invention is that the panel supporting table comprises a first and second supporting platforms, arranged near one another and coupled to independent driving means.

## Description

### BACKGROUND OF THE INVENTION

The present invention relates to an automatic machine for machining panels and the like.

As is known, for surface machining or processing panels and the like, automatic milling and drilling machines are conventionally used, the panel to be machined being arranged on a working platform or plane, affected by a plurality of operating heads.

Prior art panel machining apparatus of the above mentioned type, however, involve a comparatively long processing time, because of long operations for mounting the panels to be processed and removing said processed or machined panels.

Moreover, for holding by suction the panel on its working platform a comparatively high power is required.

Thus, it should be apparent that the above mentioned drawbacks negatively affect the finished product costs.

### SUMMARY OF THE INVENTION

Accordingly, the aim of the present invention is to overcome the above mentioned drawbacks, by providing an automatic machine for machining or processing panels and the like, allowing to easily locate and remove the panel on/from the machining platform, with the machine performing processing or machining operations on a panel arranged on a different working or machining platform.

Within the scope of the above mentioned aim, a main object of the present invention is to provide a panel supporting platform or plane which is specifically designed for providing a very good suction force, without applying high power thereto.

Another object of the present invention is to provide such a panel machining automatic machine which, owing to its peculiar constructional features, is very reliable and safe in operation.

Yet another object of the present invention is to provide such an automatic machine for machining or processing panels and the like which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by an automatic machine for machining panels and the like, comprising, on a bearing framework, a panel supporting table, characterized in that said panel supporting table comprises a first and second supporting platforms adjoining one another and coupled to independent drive means.

### BRIEF DESCRIPTION OF THE DRAWINGS

Further characteristics and advantages of the present invention will become more apparent hereinafter from the following detailed disclosure of a preferred, though not exclusive, embodiment of an automatic machine for machining panels and the like, being shown, by way of an indicative, but not limitative, example in the accompanying drawings, where:

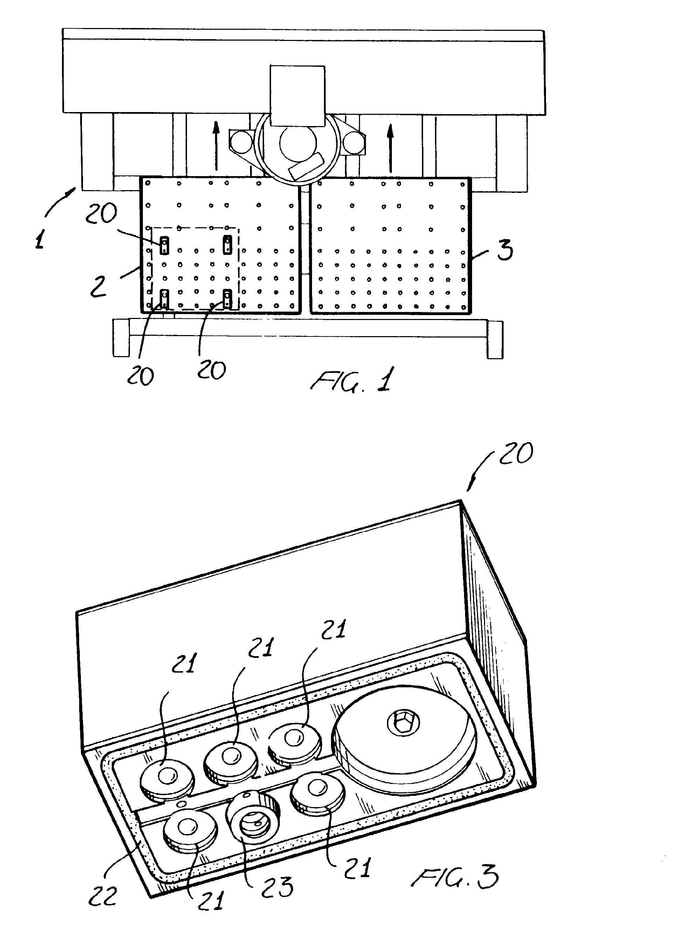

Figure 1 is a schematic top plan view illustrating the automatic machine according to the invention;

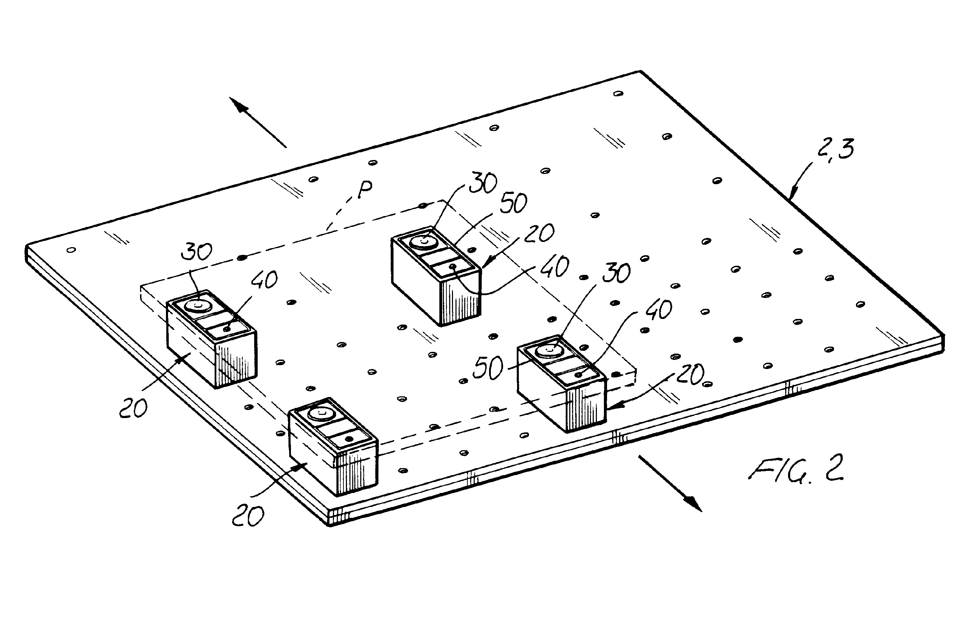

Figure 2 is a perspective view illustrating a platform for supporting a panel being machined or processed;

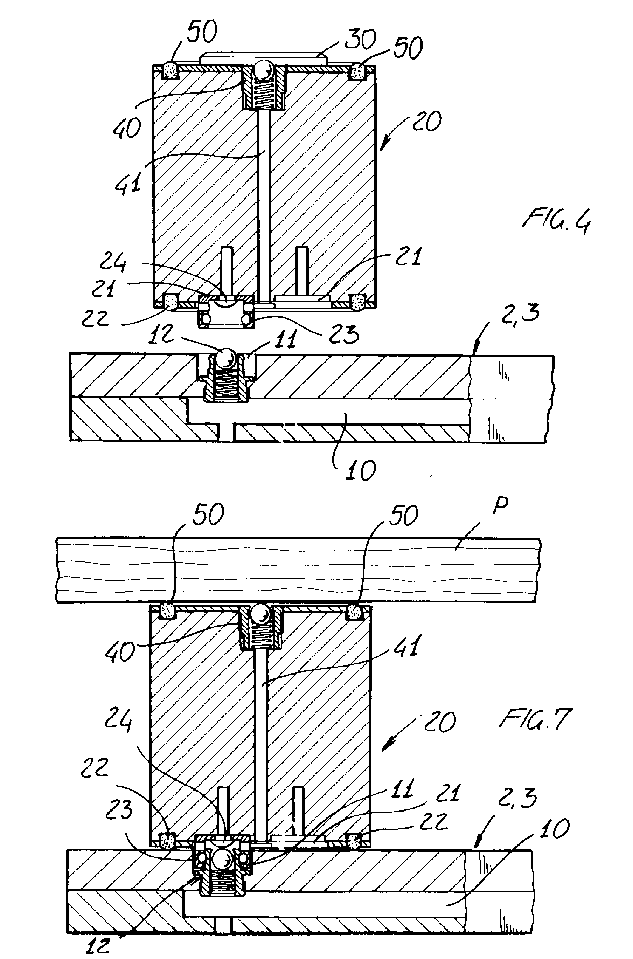

Figure 3 is a bottom perspective view illustrating a spacing block;
Figure 4 is a cross-sectional view illustrating a spacing block arranged at an exploded position from the supporting platform or plane;

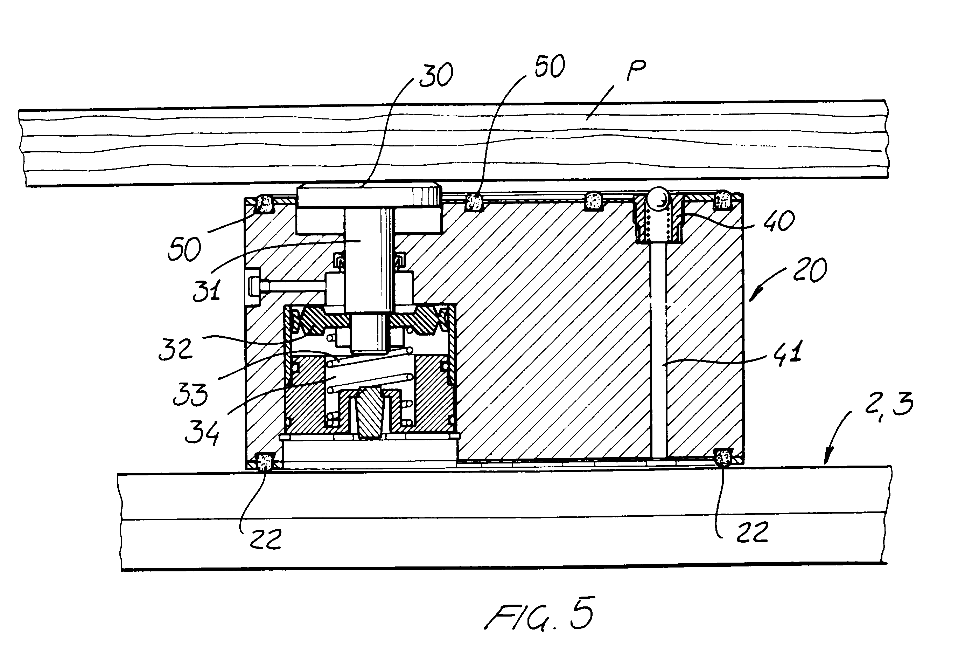

Figure 5 is a further cross-sectional view illustrating the operating step of locating the panel on spacing blocks;
Figure 6 is a schematic cross-sectional view illustrating an operating step for locking the panels; and
Figure 7 is a further cross-sectional view illustrating a spacing block during a panel locking step, as cross-sectioned through a plane perpendicular to the cross-sectional plane of Figure 6.

### DESCRIPTION OF THE PREFERRED EMBODIMENTS

With reference to the number references of the above mentioned figures, the automatic machine for machining or processing panels and the like, which has been generally indicated by the reference number 1, comprises a bearing framework 2, of a per se known type, thereon is arranged a supporting table for supporting the panels to be machined or processed, which supporting table comprises a first supporting platform or plane 2 and a second supporting platform or plane 3, arranged adjoining one another and coupled to independent driving or translating means.

The supporting platforms 2 and 3, in particular, can be independently driven, in order to allow a panel to be loaded while the operating head is processing another panel supported on the other panel supporting platform.

The platforms 2 and 3 can also be driven in a synchronous manner with respect to one another, if a large size panel is to be processed.

A main feature of the present invention is that the supporting platforms 2 and 3 define in their inside a chamber 10, coupled to a suction source, and which, at the top face of the supporting platform, is provided with a plurality of openings 11 housing therein corresponding ball shutter elements 12, which are arranged in a normally closed position, thereby the suction can be carried out only when the shutter elements 12 are opened.

On the supporting platform 2 or 3 a spacing block, generally indicated by the reference number 20 can be arranged, which spacing block is provided, on its bottom surface, with a plurality of suction ports 21, arranged inside a region delimited by a gasket 22, of closed loop configuration, providing the required tightness for each corresponding supporting platform.

In this connection it should be pointed out that said ports 21 are so arranged to allow the block 20 to be optimally located, by actuating the opening 11 correspondingly arranged.

To that end, an actuating ring 23 is provided, which can be engaged in the ports 21 and comprises a pushing element 24 for opening a related shutter 11, thereby providing coupling to the suction source.

The block 20, on its surface opposite to the surface thereof formed with the suction ports 21, comprises a locating plate 30 which, in its starting condition, operates to hold the platform "P" in a raised condition, thereby facilitating a proper location of said platform.

The plate 30 is coupled to a stem 31 extending from a disc-like piston 32 and thereon operates a pushing spring 33 included in a locating chamber 34.

The pushing spring 33, in particular, is so calibrated as to hold the plate 30 outside of the top surface of the block 20, also when the panel is applied.

In such a position, the suction shutter element 40 arranged on the top face of the block 20 will be closed.

Thus, the suction duct 41, coupled at the bottom thereof to the region delimited by the closed gasket 22, cannot be actuated.

Upon having properly located a panel, the chamber 10 is brought to a negative pressure and, accordingly, through the port 21, also the chamber 34 being brought to a negative pressure or depressurized.

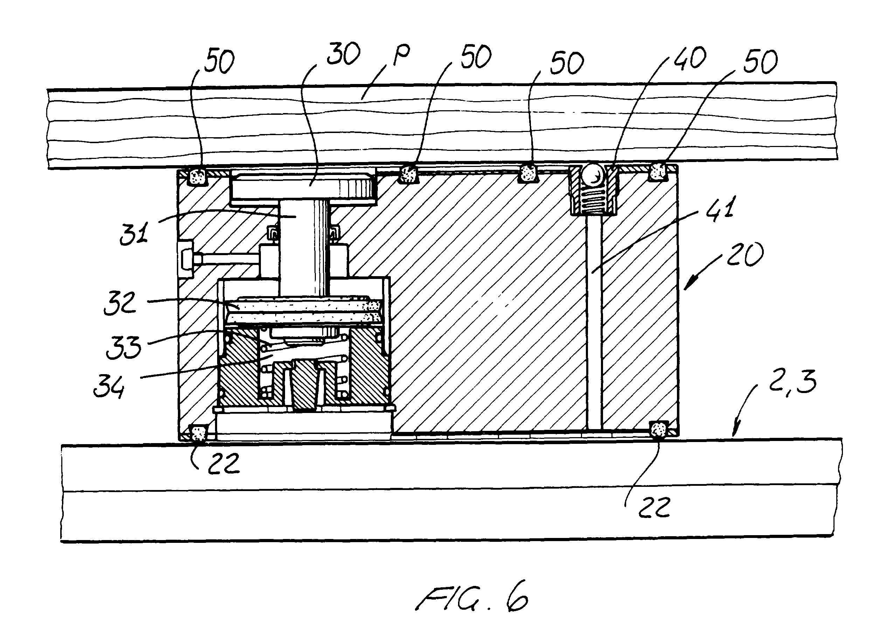

The formed vacuum will cause the piston 32 to be lowered, thereby bringing the locating plate 30 to the bottom position thereof, as is shown in Figure 6, thereby the panel "P" will be lowered to open the suction shutter 40.

Consequently, a negative pressure will be transmitted to the region delimited by the top closed contour gaskets 50, which will contact the panel thereby providing the desired suction.

Upon ending the panel machining, it would be sufficient to remove the suction, for causing the locating plate 30 to raise the panel again, and disengage it from the supporting blocks.

From the above disclosure it should be apparent that the invention fully achieves the intended aim and objects.

In particular, the fact is to be pointed out that an automatic machine for processing panels and the like has been provided, which allows to accurately locate the panels to be machined in a quick manner, by exploiting the inherent possibility of applying a panel whereas the other panel is machined.

The invention, as disclosed, is susceptible to several modifications and variations all of which will come within the scope of the inventive idea.

Moreover, all of the constructional details can be replaced by other technically equivalent elements.

In practicing the invention, the used materials, as well as the contingent size and shapes, can be any, depending on requirements.

## Claims

1. An automatic machine for machining panels and the like, comprising, on a bearing framework, a panel supporting table, **characterized in that** said panel supporting table comprises a first and second supporting platforms adjoining one another and coupled to independent drive means.

2. An automatic machine according to the preceding claim, **characterized in that** said first and second supporting platform allow a panel to be loaded on a supporting platform whereas another panel is machined on the other supporting platform.

3. An automatic machine according to the preceding claims, **characterized in that** said supporting platforms can be synchronously driven for processing large sized panels.

4. A supporting platform for supporting panels in an automatic machine for machining panels and the like, **characterized in that** said supporting platform comprises a platform body inside which is defined a chamber communicating with a suction source, said chamber including a plurality of openings leading to the top surface of said platform and each being controlled by a shutter element.

5. A supporting platform according to Claim 4, **characterized in that** said supporting platform comprises a spacing block, which can be arranged on said supporting platform for actuating at least a shutter element.

6. A supporting platform, according to one or more of the preceding claims, **characterized in that** said spacing block is provided, on a bottom face thereof, with a plurality of suction ports arranged in a region delimited by a closed loop tight gasket and that in one of said ports is arranged a ring element for actuating a shutter element applied on the supporting platform.

7. A supporting platform according to one or more of the preceding claims, **characterized in that** said supporting platform comprises, on the top face thereof, a locating plate coupled, by a stem, to a disc-like piston thereon a pushing spring operates, said pushing spring being housed in a housing chamber, and that said pushing spring is so calibrated as to hold said plate in a withdrawn position from the top face of said pushing block, as said panel is arranged on said block, thereby, in such a condition, a pressure will cause said plate to be withdrawn and a suction shutter element to be actuated, said suction shutter element being defined on the top surface of said block.

8. A supporting platform according to one or more of the preceding claims, **characterized in that** said spacing block is provided, on the top face thereof, with a top sealing gasket delimiting a location region for said plate and suction shutter element communicating, through a suction duct, with the bottom face of said spacing block.

9. An automatic machine, for machining panels and the like, and a supporting platform therefor, according to one or more of the preceding claims, and as substantially disclosed and illustrated for the intended aim and objects.
